# EUROPEAN PATENT SPECIFICATION

(11) **EP 2 380 736 B1**
(45) Date of publication and mention of the grant of the patent: **20.02.2013**
(21) Application number: 10160997.2
(22) Date of filing: 26.04.2010
(51) Int. Cl.: B32B 43/00, B29B 17/02

(54) **Process and apparatus for disassembly of laminated glazings or photovoltaic modules**
Verfahren und Vorrichtung zum Abbau von beschichteten Verglasungen oder von Photovoltaikmodulen
Procédé et appareil de désassemblage de vitrages laminés ou modules photovoltaïques

(43) Date of publication of application: 26.10.2011
(73) Proprietor: Ergün, Cengiz, 51149 Köln (DE)
(72) Inventor: Ergün, Cengiz, 51149 Köln (DE)
(74) Representative: Kisters, Michael Marcus

(56) References cited:
- US-A1- 2009 209 667

## Description

### Description

The present invention is related to a process for disassembling laminated glazing or photovoltaic modules comprising at least one glass sheet and one polymeric interlayer film by separating the glass sheet from the interlayer film and recovery of undamaged glass sheets.

### Prior art

Laminated glazing comprising glass sheets combined by an interlayer film is long known in the art and used for example as windshield for cars or as safety glass for architectural applications. The production of such glazing is, depending on the size and the thickness of the glazing, a complicated procedure and may result in defects in the interlayer film such as gas bubbles, haze or encapsulated particles. Optical defects of a laminate can only be detected after the lamination procedure is completed and no corrections means are possible. In worst case, the laminate is complete failure and not acceptable for the customer.

In addition to the defect glazing originating from the manufacturing process, millions of windscreens per year are exchanged for replacement or are removed from scrap cars.

Currently, no commercial satisfactory method to recycle a laminate is known besides shredding. The resulting glass lumps are contaminated by residues of the interlayer film and have a poor quality. Recycling into production of glass is only possible for non optical applications like bottles because the remaining interlayer film is burned during the melting of glass thereby producing impurities. The same applies to recycling of interlayer film, where even combustion of used interlayer film from shredded glass laminate is difficult because of contamination with glass particles. Mostly, laminated glazing is not recycled at all, but simply land filled.

Besides the environmental unfriendly land filling, it would be of great economical interest to disassemble defect laminated glazing and recycle undamaged and defect-free glass sheets into the lamination process. Given the enormous number of windshields produced every year either for new cars or as replacement even the recycling of relatively cheap windshield glazing would be both economical and ecological desirable.

The same ratio applies to the emerging market of photovoltaic modules. Especially building integrated photovoltaic modules (BIPV) comprise two glass sheets and photosensitive materials combined by an adhesive film. In addition to the recycling of the expensive "low iron" glass sheets, disassembling of photovoltaic modules would open an opportunity to regain the valuable and in part toxic metals used as photosensitive layer.

### Object of the invention

Object of the present invention is therefore a process and an apparatus for disassembling a laminate comprising at least two glass sheets bonded together by at least on polymeric interlayer film, characterized in a) adhering the laminate by one glass sheet to one or more suction cups, b) attaching at least one other glass sheet to one ore more fixation means, c) heating the laminate above the softening point of the interlayer film and d) move the suction cups relative to the fixation means, thereby sheering off the interlayer film and separating the glass sheets.

All preferred embodiments disclosed for the apparatus of the invention shall apply for the process of the invention and vice versa. Preferable the laminate (i.e. the glass sheets) is bended or curved, which is especially the case in windscreens. In this case, the relative movement of the suction cups is a circular movement according to the shape of the laminate. In a preferred embodiment of the invention, the suction cups are vertically adjustable.

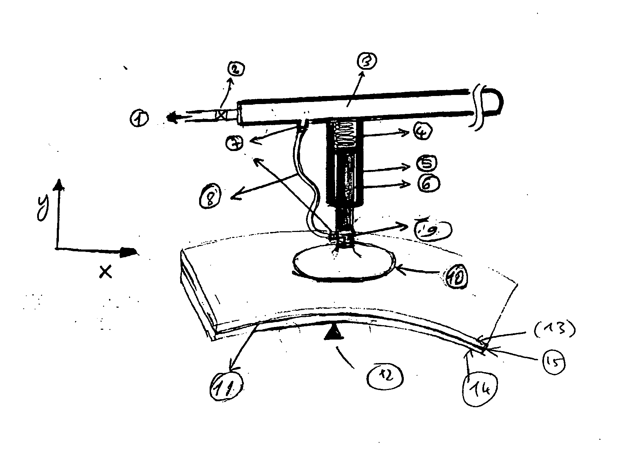

Fig. 1 shows by way of example an apparatus and a process with some preferred embodiments of the invention. Referring to Fig. 1, a Laminate (11) comprising upper glass sheet (13) and lower glass sheet (14), combined via interlayer film (15) is adhered by the upper sheet (13) to one more (only one shown) suction cups (10) preferable made from silicon. The suction cups (10) can be evacuated via orifices (7) and (9) and tubing (8) into vacuum line (3). The evacuation process can be controlled by valve (2) and a vacuum pump (1, not shown). The suction cups (10) are optionally vertically adjustable in y-direction by mountings (5) and (6) and spring (4) as required by the shape of the bended glazing. The laminated glazing (11) is fixed at the lower glass sheet (14) by fixation means (12) which is preferable made from silicon. Part of the apparatus including suction cups (10), tubing and vacuum line (3) is movable in x-direction by a not shown means. Also not shown is a heating device, which elevates the temperature of the interlayer film (15) in glazing (11) above its softening point. By movement of the suction cups (10), tubing and vacuum line (3), the upper glass sheet is forced in x-direction, whereas the lower glass sheet (15) remains fixed at support (12). Is the applied force strong enough, the interlayer film will be sheared off from upper glass and lower glass sheet (13) and (14). If the laminate is bended or curve-shaped, the movement is preferable conducted on a curve similar to the shape of the laminate. The glass sheets are disassembled without destruction or scratches and after optional cleaning may be recycled into the lamination process.

Preferable, the laminate disassembled by the process of the invention are bended or planar glass/glass laminates like windshields for cars, busses, trucks or aircrafts, planar or bended laminated glazing for architectural/building application, photovoltaic modules or mirrors of solar concentration modules. The laminate may comprise 2, 3, 4 or more glass sheets combined with the same or different interlayer films for example for bullet proof glazing.

For bended or curved laminated glazing, the suction cups are preferably vertically (as seen from the laminate) adjustable according to the shape of the laminate. In this case, the relative movement at the suction cups is a circular movement according to the shape of the laminate.

The suction cups are usually made from polymeric material, having a high adhesion to glass, like silicon. The suction cups are adhered to the upper and lower glass sheet by applying a reduced pressure for example of 0,01 to 0,99 bar to the suction cups. The number of suction cups depends on the size of the laminate and the strength of the interlayer film. For a windshield of a middle-sized car, 1 - 30 suction cups are sufficient.

The fixation means are preferable made from the same material as the suction cups and can be silicon pads of an appropriate size and number. In a preferred embodiment, the fixation means are suction cups as already described i.e. optionally vertically adjustable and vacuum operated. For separating the windshield of a middle-sized car, 1 - 30 fixation means or suction cups as fixation means are sufficient.

In a first embodiment of the invention, the fixation means like silicon pads are not movable in any direction but fixed to an appropriate frame. In another embodiment of the invention, especially if in step d) of the invention suction cups are used as fixation means, the fixation means to the lower glass sheet are movable in the opposite direction of the suction cups adhered to the upper glass sheet.

Preferable, the laminate is heated to a temperature allowing the separation of the laminate by a prefixed shearing force applied by the movement of the suction cups in step d). This process can be easily controlled by measuring the force applied to the suction cups. If the force is too high, the temperature of the laminate/interlayer film is further elevated by way of a control cycle. The temperature and force applied to the laminate can be controlled by a appropriate computer software to minimize the heat and force in order to minimize energy cost and the possibility of damaging the glass.

The interlayer film can be heated for example by convection heating, micro wave heating ob by UV or IR radiation above its softening point, thereby allowing the separation of the laminate without damaging the glass sheets. Preferable, micro wave radiation is used where the wave length may be adjusted to the thickness of the glass sheets and the chemistry of the interlayer film in order to minimize the necessary energy input for separation of the glass sheets. Usually interlayer films comprise EVA, polyvinyl acetal like polyvinyl butyral (PVB) and are plasticized with 3G8 (triethylenglycol octanoate). The wavelength of the micro wave radiation should be selected for optimal absorption by one of these compounds.

Usually the softening point of interlayer films is between 80 and 240 °C and heating of the laminate/the interlayer film is in the same range, preferable to 100 to 150 °C.

It is another object of the invention to clean the disassembled glass sheets by removing residues or traces of interlayer film. Here, the separated glass sheets are subjected to elevated pressure and elevated temperature in the presence of water and/or an organic solvent like alcohol (ethanol, or isopropanol), optional by addition of a tenside for a time sufficient to reduce the adhesive strength of the interlayer film to glass. For this purpose, an autoclave can be used.

Preferable the separated glass sheets are subjected for 10 to 120 min. to temperatures of 50 to 150 °C and a pressure of 1 to 15 bar. Such conditions can easily be achieved by subjecting pressurized water steam into an autoclave.

To accelerate the cleaning process, the separated glass sheets may be subjected to elevated temperature and pressure in the presence of an aqueous solution of metal ions selected from the group Na, K, Mg, Zn, Al, Ca.

## Claims

1. Process for disassembling a laminate comprising at least two glass sheets bonded together by at least one polymeric interlayer film, comprising a) adhering the laminate by one glass sheet to one or more suction cups, b) attaching at least one other glass sheet to one or more fixation means, c) heating the laminate above the softening point of the interlayer film and d) moving the suction cups relative to the fixation means, thereby shearing off the interlayer film and separating the glass sheets.

2. Process according to claim 1, **characterized in that** the suction cups are vertically adjustable.

3. Process according to claim 1 or 2, **characterized in that** the suction cups are adhered to the glass sheet by applying a reduced pressure of 0,01 to 0,99 bar to the suction cups.

4. Process according to any of the claims 1 to 3 that the laminate is bended or curved and the relative movement at the suction cups is a circular movement according to the shape of the laminate.

5. Process according to any of the claims 1 to 4, **characterized in that** the fixation means are silicon pads or suction cups.

6. Process according to claim 5, **characterized in that** in step d) the fixation means are moved in the opposite direction of the suction cups adhered to the upper glass sheet.

7. Process according to any of the claims 1 to 6, **characterized in that** the laminate is heated to a temperature allowing the.separation of the laminate by a prefixed shearing force applied by the movement of the suction cups in step d).

8. Process according to any of the claims 1 to 7, **characterized by** subjecting the separated glass sheets to elevated pressure and temperature in the presence of water and removing the remaining interlayer film on the glass sheet.

9. Process according to claim 8, **characterized in that** the separated glass sheets are subjected to elevated temperature and pressure in the presence of a aqueous solution of metal ions selected from the group Na, K, Mg, Zn, Al, Ca.

10. Process according to any of the claims 1 to 9, **characterized in that** the laminate is c) heated to 80 to 240 °C.

11. Process according to any of the claims 1 to 10, **characterized in that** the interlayer film comprises plasticized polyvinyl acetal.

12. Process according to any of the claims 1 to 10, **characterized in that** the laminate is a windshield for cars, busses, trucks or aircrafts, a planar or bended laminated glazing for architectural/building application, a photovoltaic module or a mirror for solar concentration modules.

13. Apparatus for disassembling a laminate comprising at least two glass sheets bonded together by at least one polymeric interlayer, comprising a) one or more suction cups adherable to the laminate by at least one glass sheet, b) one or more fixation means attachable to the at least one other glass sheet, c) a heating device for the laminate and d) a means to move the suction cups relative to the fixation means allowing the separation of the glass sheets by shearing off the interlayer film.

## Patentansprüche

1. Verfahren zum Abbau eines Verbundglases, das aus mindestens zwei Glasscheiben besteht, die durch mindestens eine polymere Verbundfolie miteinander verbunden sind, umfassend a) das Haften des Verbundglases mit einer Glasscheibe an einem oder mehreren Saugnäpfen, b) das Befestigen von mindestens einer weiteren Glasscheibe an einem oder mehreren Befestigungsmitteln, c) das Erhitzen des Verbundglases über den Erweichungspunkt der Verbundfolie und d) das Bewegen der Saugnäpfe relativ zu den Befestigungsmitteln, wodurch die Verbundfolie abgeschert wird und die Glasscheiben getrennt werden.

2. Verfahren nach Anspruch 1, **dadurch gekennzeichnet, dass** die Saugnäpfe vertikal verstellbar sind.

3. Verfahren nach Anspruch 1 oder 2, **dadurch gekennzeichnet, dass** die Saugnäpfe durch Anlegen eines Unterdrucks von 0,01 bis 0,99 bar an der Glasscheibe haften.

4. Verfahren nach einem der Ansprüche 1 bis 3, **dadurch gekennzeichnet, dass** das Verbundglas gebogen oder gewölbt ist und die relative Bewegung der Saugnäpfe eine kreisförmige Bewegung entsprechend der Form des Verbundglases ist.

5. Verfahren nach einem der Ansprüche 1 bis 4, **dadurch gekennzeichnet, dass** die Befestigungsmittel Silikon-Pads oder Saugnäpfe sind.

6. Verfahren nach Anspruch 5, **dadurch gekennzeichnet, dass** in Schritt d) die Befestigungsmittel in die entgegengesetzte Richtung der an der oberen Glasscheibe haftenden Saugnäpfe bewegt werden.

7. Verfahren nach einem der Ansprüche 1 bis 6, **dadurch gekennzeichnet, dass** das Verbundglas auf eine Temperatur erhitzt wird, die die Trennung des Verbundglases durch eine vorher festgelegte Scherkraft ermöglicht, die durch die Bewegung der Saugnäpfe in Schritt d) aufgebracht wird.

8. Verfahren nach einem der Ansprüche 1 bis 7, **gekennzeichnet durch** die Exposition der getrennten Glasscheiben gegenüber einem erhöhten Druck und einer erhöhten Temperatur in Gegenwart von Wasser und dem Entfernen der restlichen Verbundfolie auf der Glasscheibe.

9. Verfahren nach Anspruch 8, **dadurch gekennzeichnet, dass** die getrennten Glasscheiben einer erhöhten Temperatur und einem erhöhten Druck in Gegenwart einer wässrigen Lösung aus Metallionen ausgesetzt sind, die aus der Gruppe Na, K, Mg, Zn, Al, Ca ausgewählt sind.

10. Verfahren nach einem der Ansprüche 1 bis 9, **dadurch gekennzeichnet, dass** das Verbundglas auf 80 bis 240 °C erhitzt wird.

11. Verfahren nach einem der Ansprüche 1 bis 10, **dadurch gekennzeichnet, dass** die Verbundfolie weichmacherhaltiges Polyvinylacetal enthält.

12. Verfahren nach einem der Ansprüche 1 bis 10, **dadurch gekennzeichnet, dass** das Verbundglas eine Windschutzscheibe für Personenkraftwagen, Busse, Lastkraftwagen oder Flugzeuge, eine flache oder gebogene Verbundglasscheibe für architektonische Anwendungen/Bauanwendungen, ein Photovoltaikmodul oder ein Spiegel für Solarkonzentrationsmodule ist.

13. Vorrichtung zum Abbau eines Verbundglases, das aus mindestens zwei Glasscheiben besteht, die durch mindestens eine polymere Verbundfolie miteinander verbunden sind, umfassend a) einen oder mehrere Saugnäpfe, die an mindestens einer Glasscheibe des Verbundglases haften können, b) ein oder mehrere Befestigungsmittel, die an der mindestens einen anderen Glasscheibe befestigbar sind, c) eine Heizvorrichtung für das Verbundglas und d) ein Mittel, um die Saugnäpfe relativ zu den Befestigungsmitteln zu bewegen, was die Trennung der Glasscheiben durch Abscheren der Verbundfolie ermöglicht.

## Revendications

1. Procédé de désassemblage d'un verre feuilleté comprenant au moins deux feuilles de verre liées entre elles par au moins un film intercalaire polymère, comprenant a) faire adhérer une feuille de verre du verre feuilleté à une ou plusieurs ventouses, b) fixer au moins une autre feuille de verre à un ou plusieurs moyens de fixation, c) chauffer le verre feuilleté au-dessus du point de ramollissement du film intercalaire, et d) déplacer les ventouses par rapport aux moyens de fixation, cisaillant ainsi le film intercalaire et séparant les feuilles de verre.

2. Procédé selon la revendication 1, **caractérisé en ce que** les ventouses sont réglables verticalement.

3. Procédé selon la revendication 1 ou 2, **caractérisé en ce que** les ventouses adhèrent à la feuille de verre par application d'une dépression de 0,01 à 0,99 bar sur les ventouses.

4. Procédé selon l'une quelconque des revendications précédentes 1 à 3, **caractérisé en ce que** le verre feuilleté est plié ou courbé et le mouvement relatif des ventouses est un mouvement circulaire en fonction de la forme du verre feuilleté.

5. Procédé selon l'une quelconque des revendications précédentes 1 à 4, **caractérisé en ce que** les moyens de fixation sont des coussins en silicone ou des ventouses.

6. Procédé selon la revendication 5, **caractérisé en ce que** dans l'étape d), les moyens de fixation sont déplacés dans le sens inverse des ventouses adhérant à la feuille de verre supérieure.

7. Procédé selon l'une quelconque des revendications précédentes 1 à 6, **caractérisé en ce que** le verre feuilleté est chauffé à une température permettant la séparation du verre feuilleté par une force de cisaillement prédéterminée appliquée par le mouvement des ventouses de l'étape d).

8. Procédé selon l'une quelconque des revendications précédentes 1 à 7, **caractérisé par** l'exposition des feuilles de verre séparées à une pression et une température élevées en présence d'eau et par l'enlèvement du film intercalaire restant sur la plaque de verre.

9. Procédé selon la revendication 8, **caractérisé en ce que** les feuilles de verre séparées sont soumises à une température et une pression élevées en présence d'une solution aqueuse d'ions métalliques sélectionnés du groupe Na, K, Mg, Zn, Al, Ca.

10. Procédé selon l'une quelconque des revendications précédentes 1 à 9, **caractérisé en ce que** le verre feuilleté est chauffé à 80 à 240 degrés C.

11. Procédé selon l'une quelconque des revendications précédentes 1 à 10, **caractérisé en ce que** le film intercalaire comprend acétal de polyvinyle plastifié.

12. Procédé selon l'une quelconque des revendications précédentes 1 à 10, **caractérisé en ce que** le verre feuilleté est un pare-brise de voiture, de camion, de bus ou d'avion, un vitrage feuilleté plan ou courbé pour des applications architecturales/de construction, un module photovoltaïque ou un miroir pour les modules de concentration solaire.

13. Appareil de désassemblage d'un verre feuilleté comprenant au moins deux feuilles de verre liées entre elles par au moins un film intercalaire polymère, comprenant au moins une ou plusieurs ventouses susceptibles d'adhérer à au moins une feuille de verre du verre feuilleté, b) un ou plusieurs moyens de fixation pouvant être fixés à l'au moins une autre feuille de verre, c) un dispositif de chauffage pour le verre feuilleté, et d) un moyen pour déplacer les ventouses par rapport aux moyens de fixation ce qui permet la séparation des feuilles de verre par cisaillement du film intercalaire.
